(19) Europäisches Patentamt / European Patent Office / Office européen des brevets

(11) **EP 4 389 309 B1**

(12) **FASCICULE DE BREVET EUROPEEN**

(45) Date de publication et mention
de la délivrance du brevet:
**06.08.2025 Bulletin 2025/32**

(21) Numéro de dépôt: **23217465.6**

(22) Date de dépôt: **18.12.2023**

(51) Classification Internationale des Brevets (IPC):
**B08B 7/02** *(2006.01)*    **B08B 17/02** *(2006.01)*
**G01N 21/15** *(2006.01)*    **G02B 27/00** *(2006.01)*
**G01C 13/00** *(2006.01)*

(52) Classification Coopérative des Brevets (CPC):
**B08B 7/02; B08B 17/02; G01N 21/15;**
**G02B 27/0006;** G01N 2021/154

(54) **SYSTÈME ANTIFOULING AMÉLIORÉ, DESTINÉ À ÊTRE REPORTÉ SUR UN DISPOSITIF DE MESURE**

VERBESSERTES ANTIFOULING-SYSTEM ZUR ÜBERTRAGUNG AUF EINE MESSVORRICHTUNG

IMPROVED ANTI-FOULING SYSTEM FOR TRANSFER ONTO A MEASURING DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.12.2022 FR 2214324**

(43) Date de publication de la demande:
**26.06.2024 Bulletin 2024/26**

(73) Titulaire: **Commissariat à l'Energie Atomique et aux Energies Alternatives**
**75015 Paris (FR)**

(72) Inventeur: **CASSET, Fabrice**
**38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
EP-A1- 3 851 213     WO-A1-2021/255396
US-A1- 2015 285 733     US-B2- 8 473 262

**Description**

## DOMAINE TECHNIQUE

Le domaine de l'invention est celui des systèmes dits « antifouling » (selon un anglicisme qui peut se traduire en français par anti-encrassement biologique) destinés à équiper des dispositifs de mesure (notamment des dispositifs de mesure optique) immergés dans un milieu liquide, en particulier des capteurs et des sondes de mesure.

## ÉTAT DE LA TECHNIQUE ANTÉRIEURE

De nombreux capteurs sont utilisés en milieu liquide pour contrôler les propriétés du milieu (sonde à pH, densité, etc.) ou mesurer des caractéristiques diverses telles que la turbidité, la présence d'espèces chimiques ou de certaines souches de bactéries, etc.

Ces capteurs peuvent être utilisés dans un environnement industriel (cuves, conduits) ou naturel (mer, océans, fleuves, etc.). Ainsi, ce sont des millions de capteurs immergés qui sont utilisés en milieu liquide.

Or, toute surface immergée dans un liquide, que ce soit en eau douce ou en eau de mer, est sujette au dépôt et à l'adhésion d'organismes qui peuvent être des bactéries, des algues, des mollusques, etc. Ce phénomène est connu sous le terme anglais de « biofouling », ou d'encrassement biologique. L'adhésion de microorganismes sur les matériaux et leur multiplication conduit à la formation d'un film (dit « biofilm ») en surface des matériaux immergés, et ce après seulement quelques minutes d'immersion.

Ce phénomène de biofouling est problématique dans le monde des capteurs, car il va souvent impacter les mesures en milieu liquide de ces capteurs.

On peut prendre l'exemple des capteurs optiques, qui utilisent un faisceau optique pour contrôler une propriété du milieu liquide, par exemple la turbidité. Le biofouling sur la fenêtre (ou hublot) optique du capteur optique va impacter le passage du faisceau et ainsi dégrader la mesure, jusqu'à la rendre impossible.

Selon un autre exemple, dans le cas d'un capteur biologique devant détecter l'accroche spécifique d'agents recherchés à la surface d'une couche de fonctionnalisation, la présence d'un biofouling va rendre impossible à la cible recherchée d'atteindre la couche de fonctionnalisation ; le capteur ne fonctionnera donc plus du tout, ou pire, donnera des résultats d'alerte faux positifs.

On comprend aisément que des solutions dites « antifouling », conçues pour lutter contre le biofouling des capteurs, sont nécessaires pour obtenir une qualité de données constante des capteurs et pour diminuer la maintenance nécessaire à leur nettoyage.

Parmi les solutions connues, on peut citer le dispositif d'anti-encrassement de la Demanderesse, qui est décrit dans la demande de brevet FR 3 106 211 et qui est conçu pour équiper un système de mesure destiné à être immergé.

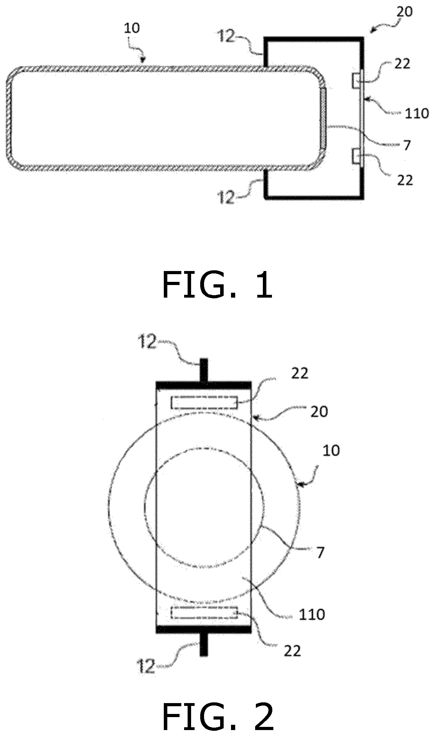

Comme illustré dans la figure 1, un dispositif de mesure 10 (par exemple un capteur optique), qui comporte une surface sensible à l'encrassement (en d'autres termes, qui est sujette à l'encrassement ou susceptible d'être encrassée par des microorganismes), est équipé d'un système anti-encrassement 20 (ou système antifouling). Ce système anti-encrassement 20 comporte :

- une plaque 110 apte à vibrer ;
- des moyens de maintien 12, configurés pour maintenir la plaque 110 au-dessus de la surface sensible 7 du dispositif de mesure 10 (par exemple, la surface sensible peut être une fenêtre optique), une face arrière de la plaque faisant face à la surface sensible ;
- au moins un actionneur 22 apte à mettre en vibration la plaque 110, de sorte à générer une onde acoustique apte à au moins limiter une fixation de microorganismes sur la surface sensible.

De manière connue, une unité de commande CU (non représentée) est configurée pour commander ledit actionneur pour mettre en vibration la plaque.

Dans la figure 2 est illustrée une vue de dessus de ce système de l'art antérieur. Ici, on peut voir que le dispositif de mesure 10 est de forme cylindrique et la plaque est de forme rectangulaire. Les moyens de maintien 12 permettant de maintenir la plaque au-dessus de la surface sensible 7 peuvent être des barres.

Dans cette configuration, le liquide dans lequel est immergé l'ensemble formé par le dispositif de mesure 10 et le système antifouling 20 circule entre le dispositif 10 et le système anti-encrassement 20. L'onde acoustique générée par la mise en vibration de la plaque va se propager dans le liquide et, en arrivant sur la surface sensible 7, limiter voire empêcher l'encrassement biologique de cette surface sensible.

Ainsi, dans cet état de l'art, c'est l'onde acoustique généré par la plaque vibrante qui va provoquer l'effet antifouling. Mais la plaque vibrante peut être fragile. Pour plus de robustesse, d'efficacité et pour plus de compacité, les Inventeurs ont imaginé le cas où les moyens de maintien sont un seul élément qui, avec la surface sensible 7 du dispositif de mesure 10 et la plaque 110, délimite un espace fermé (ou cavité fermée).

Dans ce cas particulier, la face avant de la plaque est destinée à être en contact avec le liquide et la face arrière est située côté dispositif de mesure 10. La plaque 110 a donc, de part et d'autre, deux milieux qui peuvent présenter des pressions très différentes : côté dispositif de mesure, la pression est la pression atmosphérique, alors que côté liquide, la pression est la pression du liquide (par exemple, de l'eau), qui augmente avec la profondeur.

On comprend alors la limite d'un tel ensemble : la plaque doit être souple pour présenter de fortes amplitudes de vibration et, de ce fait, ne peut pas supporter les fortes pressions engendrées par une immersion en profondeur ou dans un milieu liquide sous pression.

Les inventeurs ont donc cherché à concevoir un système antifouling qui puisse équiper un dispositif de mesure, en isolant la surface sensible du dispositif, de sorte que l'ensemble ainsi formé puisse fonctionner en étant immergé en profondeur et/ou dans un liquide sous pression.

**EXPOSÉ DE L'INVENTION**

Pour ce faire, l'invention concerne un système de lutte contre l'encrassement biologique par des microorganismes, destiné être reporté sur un dispositif de mesure qui est destiné à être immergé dans un liquide à une pression $P_{liquide}$ et qui comprend une surface sensible à l'encrassement biologique, le système étant configuré pour recouvrir la surface sensible,

le système comprenant :

-   une plaque apte à vibrer, ayant deux faces principales opposées, dites face avant et face arrière, la face avant étant destinée à être en contact avec le liquide ; et
-   au moins un actionneur, situé sur l'une des faces principales de la plaque, apte à mettre en vibration la plaque, de manière à au moins limiter une fixation de microorganismes sur la plaque ;

le système étant caractérisé en ce qu'il comprend en outre :

-   une cavité fermée, qui est délimitée au moins en partie par la face arrière de la plaque, et qui est remplie avec un fluide à une pression $P_{cavité}$ ; et
-   un compresseur à fluide, en communication fluidique avec la cavité fermée, apte à moduler la pression $P_{cavité}$ de fluide dans la cavité, de sorte que la valeur absolue de la différence entre la pression $P_{liquide}$ sur la face avant et la pression $P_{cavité}$ sur la face arrière soit inférieure à $2.10^5$ Pa (2 bar), préférentiellement inférieure à $5.10^4$ Pa (0,5 bar), idéalement que les pressions soient égales. En effet, de préférence, le compresseur est apte à moduler la pression dans la cavité $P_{cavité}$ de sorte qu'elle soit égale à la pression du liquide $P_{liquide}$.

De préférence, la plaque est une membrane. On entend par « membrane » une structure présentant une faible épaisseur comparée à ses dimensions planaires. On précise que dans le cas d'une membrane encastrée, on la considèrera à son pourtour.

De préférence, l'actionneur est situé sur la face arrière de la plaque.

Le compresseur à fluide est de préférence un compresseur à air. On peut par exemple utiliser un compresseur du fabriquant Fluigent ou du fabriquant Würth.

De préférence, la cavité fermée a une profondeur, selon une direction perpendiculaire à la face arrière de la plaque, comprise entre 1 et 10 mm, bornes incluses. De préférence, cette profondeur est égale à 1 mm.

Avantageusement, la surface sensible peut être une fenêtre optique, par exemple dans le cas où le dispositif de mesure est un dispositif de mesure optique. On entend par « fenêtre optique » la zone par laquelle va passer le signal optique pour aller du dispositif de mesure optique au milieu à caractériser.

Selon une autre variante, la surface sensible peut être une couche de fonctionnalisation, dans le cas où le dispositif de mesure est un capteur biologique devant détecter l'accroche spécifique d'agents recherchés à la surface de la couche de fonctionnalisation.

Le dispositif de mesure peut par exemple être un capteur optique ou une sonde optique.

L'actionneur peut être un actionneur piézoélectrique, ferroélectrique, électrostatique, magnétique ou thermique.

L'invention concerne également un ensemble selon une première variante, comprenant un dispositif de mesure et un système de lutte contre l'encrassement biologique tel que décrit ci-dessus, dans lequel la cavité est disposée au contact de l'intégralité de la surface sensible, la surface sensible et la plaque se faisant face l'une l'autre.

De préférence, le dispositif de mesure est disposé à l'intérieur d'un boitier de protection (par exemple une enceinte), le système de lutte contre l'encrassement biologique étant utilisé pour fermer et rendre étanche le boitier, la cavité, et éventuellement le compresseur à fluide du système, étant disposé(s) à l'intérieur du boîtier.

L'invention concerne également un ensemble selon une deuxième variante, comprenant un dispositif de mesure et un système de lutte contre l'encrassement biologique tel que décrit ci-dessus, dans lequel la cavité est disposée à distance de la surface sensible, la surface sensible et la plaque se faisant face l'une l'autre, le système de lutte contre l'encrassement biologique étant utilisé pour fermer et rendre étanche le boitier, la cavité, et éventuellement le compresseur à fluide du système, étant disposé(s) à l'intérieur du boîtier.

**BRÈVE DESCRIPTION DES DESSINS**

D'autres caractéristiques et avantages de l'invention ressortiront de la description qui va suivre, prise à titre d'exemple non limitatif, en référence aux figures annexées dans lesquelles :

-   la figure 1, déjà décrite plus haut, est une représentation schématique, selon une vue de côté, d'un ensemble de l'art antérieur comprenant un dispositif de mesure ayant une surface sensible à l'encrassement biologique, qui est équipé d'un système antifouling ;

- la figure 2 est une vue de dessus de l'ensemble de l'art antérieur illustré dans la figure 1 ;
- la figure 3 est une vue en coupe schématique selon une vue de côté d'un exemple d'un système anti-encrassement selon l'invention ;
- la figure 4 est une vue en coupe schématique d'un exemple d'un système anti-encrassement selon l'invention, intégré sur la surface sensible d'un dispositif de mesure ;
- la figure 5 est une vue en coupe schématique d'un autre exemple d'un système anti-encrassement selon l'invention, intégré sur la surface sensible d'un dispositif de mesure, le tout étant inséré dans un boitier ;
- la figure 6a est une représentation schématique en coupe d'une première étape d'un exemple de réalisation d'un système anti-encrassement selon l'invention ;
- la figure 6b est une représentation schématique en coupe d'une deuxième étape d'un exemple de réalisation d'un système anti-encrassement selon l'invention ;
- la figure 6c est une représentation schématique en coupe d'une troisième étape d'un exemple de réalisation d'un système anti-encrassement selon l'invention ;
- la figure 6d est une représentation schématique en coupe d'une quatrième étape d'un exemple de réalisation d'un système anti-encrassement selon l'invention ;
- la figure 6e est une représentation schématique en coupe d'une cinquième étape d'un exemple de réalisation d'un système anti-encrassement selon l'invention ;
- la figure 6f est une représentation schématique en coupe d'une sixième étape d'un exemple de réalisation d'un système anti-encrassement selon l'invention ;
- la figure 6g est une représentation schématique en coupe d'une septième étape d'un exemple de réalisation d'un système anti-encrassement selon l'invention ;
- la figure 6h est une représentation schématique en coupe d'une huitième étape d'un exemple de réalisation d'un système anti-encrassement selon l'invention ;
- la figure 6i est une représentation schématique en coupe d'une neuvième étape d'un exemple de réalisation d'un système anti-encrassement selon l'invention ;
- la figure 6j est une représentation schématique en coupe d'une dixième étape d'un exemple de réalisation d'un système anti-encrassement selon l'invention.

## EXPOSÉ DÉTAILLÉ DE MODES DE RÉALISATION PARTICULIERS

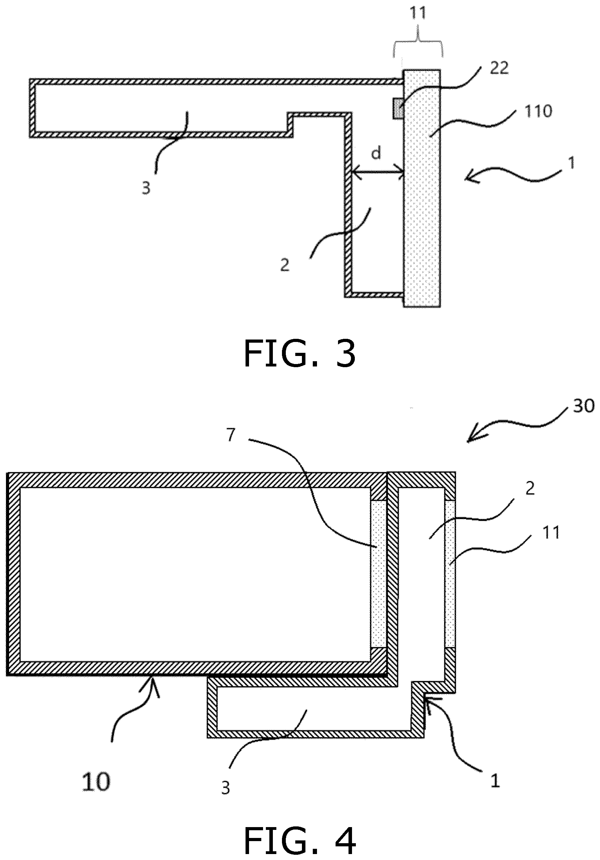

Un exemple de réalisation d'un système anti-encrassement 1 selon l'invention est illustré dans la figure 3. Le système 1 comprend une plaque 110 apte à vibrer, ayant une face avant et une face arrière, la face avant étant destinée à être en contact avec le liquide ; un actionneur 22, qui est ici situé sur la face arrière de la plaque ; l'ensemble plaque 110 et actionneur 22 est désigné par la référence 11 ; une cavité 2 fermée, qui est délimitée au moins en partie par la face arrière de la plaque 110, et qui est remplie avec un fluide à une pression $P_{cavité}$ ; et un compresseur à fluide 3, qui est en communication fluidique avec la cavité 2 fermée.

Le compresseur à fluide est apte à moduler la pression $P_{cavité}$ de fluide dans la cavité, de sorte que la valeur absolue de la différence entre la pression $P_{liquide}$ sur la face avant et la pression $P_{cavité}$ sur la face arrière soit inférieure à 2 bar, préférentiellement 0,5 bar, idéalement que les pressions soient égales.

La cavité 2 du système anti-encrassement 1 peut être disposée à distance de la surface sensible 7, et dans ce cas la cavité et le dispositif de mesure avec la surface sensible devront obligatoirement être placés dans un boîtier de protection 4 afin que la surface sensible, malgré cette distance, soit protégée.

De préférence, la cavité 2 du système anti-encrassement 1 est destinée à être disposée au contact d'au moins une partie de la surface sensible 7 (de préférence, de l'intégralité de la surface sensible) d'un dispositif de mesure 10, la surface sensible 7 et la plaque (membrane) 110 étant destinées à se faire face l'une l'autre, l'assemblage du dispositif de mesure 10 et du système de lutte contre l'encrassement biologique 1 formant un ensemble 30. Par exemple, la surface sensible 7 peut être la fenêtre optique d'un dispositif de mesure optique (par exemple du type capteur optique).

Un exemple de réalisation d'un ensemble 30 selon l'invention est illustré dans la figure 4. On précise que, par souci de simplification, nous n'avons pas repris le niveau de détails présent dans la figure 3 pour représenter la plaque 110 et l'actionneur 22, et nous avons seulement utilisé la référence 11 pour désigner l'ensemble de ces éléments.

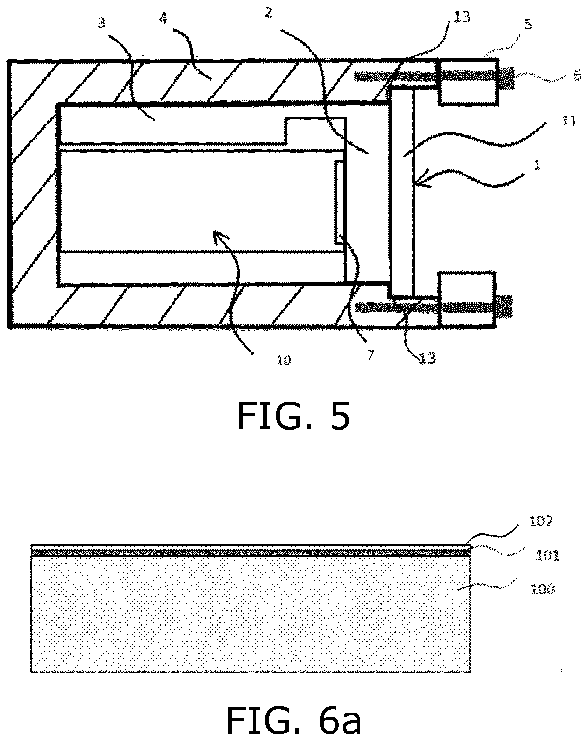

Selon un autre exemple de réalisation illustré dans la figure 5, le dispositif de mesure 10 peut être disposé à l'intérieur d'un boitier 4 de protection, le système de lutte contre l'encrassement biologique 1 étant utilisé pour fermer et rendre étanche le boitier, la cavité 2 et le compresseur à fluide 3 du système 1 pouvant être disposé à l'intérieur du boîtier 4. Dans la figure 5, le boîtier comporte, au niveau de son ouverture, un renfoncement 13 délimitant un épaulement intérieur sur lequel vient s'appuyer le système 1 de lutte contre l'encrassement. Des éléments de fixation, par exemple de type écrou 5 et vis 6 de serrage, sont ensuite utilisés pour fixer le système 1 sur le boîtier 4 et ainsi le fermer et le rendre étanche. Ce type de boitier permet d'intégrer le système antifouling au dispositif de mesure, mais tout autre intégration permettant de rassembler le système antifouling, la cavité apte à égaliser les pressions et le dispositif de mesure peut également être utilisé.

Dans l'ensemble 30 selon l'invention, le système 1 de lutte contre l'encrassement est adaptable à la pression du liquide dans lequel il est immergé. Le système de lutte contre l'encrassement peut ainsi supporter de fortes pressions de liquide, par exemple d'eau, notamment pour des immersions en eau très profonde.

Grâce à la présence, d'une part, de la cavité en face arrière de la plaque, et, d'autre part, du compresseur, qui est relié à la cavité, on peut ajuster la pression en face arrière de la plaque, de sorte à égaliser les pressions de part et d'autre de la plaque. La pression du fluide à l'intérieur de la cavité, par exemple de l'air, $P_{air}$ et la pression du liquide dans lequel est immergé l'ensemble, par exemple de l'eau, $P_{eau}$, s'équilibrent, et la plaque vibrante peut fonctionner sans être gênée par une potentielle forte différence de pression. Notons que nous donnons l'exemple d'utilisation d'air dans la cavité, mais que l'on pourrait considérer n'importe quel fluide gazeux ou liquide qui ne provoquerait pas d'encrassement biologique dans la cavité.

Dans le système anti-encrassement 1 selon l'invention, la cavité 2 en face arrière de la plaque 110 s'étend, à minima, sur toute la surface de la face arrière de la plaque apte à vibrer. Cela donne donc une indication pour la largeur et la longueur ou pour le diamètre de la cavité. La profondeur d de cette cavité, quant à elle, doit être suffisamment petite pour permettre d'obtenir facilement de potentielles fortes pressions (par exemple $5.10^7$ Pa (500 bar) à 5000 m de profondeur), mais suffisamment grande pour que la plaque ne percute pas le fond de la cavité lors de sa résonance.

Par exemple, dans le cas où la plaque est une membrane ayant un diamètre de 2 centimètres et pouvant présenter des amplitudes de déformation de plusieurs micromètres, de l'ordre de 15 $\mu$m à 50 $\mu$m, une profondeur de cavité d = 100 $\mu$m au minimum est requis. En raison de contraintes d'intégration, on choisira une valeur pour d de l'ordre de 1 à 10 mm, bornes incluses, mais on peut tout à fait avoir une cavité plus profonde ; par exemple, il est possible d'avoir une cavité dont la profondeur correspond à la profondeur du corps du dispositif de mesure 10.

Par construction, la pression intérieure $P_{int}$ dans la cavité (et donc au niveau de la face arrière de la plaque) est égale à la pression atmosphérique ($P_{atm}$).

Lors de l'immersion de l'ensemble formé par le dispositif de mesure 10 et le système anti-encrassement 1 dans un liquide, la pression $P_{ext}$ au niveau de la face avant de la plaque, en fonction de la profondeur d'immersion h (en mètres) de la plaque, est connue et suit la loi suivante :

$$P_{ext} = P_{int} + 0,1 \times h \approx 1 + 0,1 \times h$$

Dans le système anti-encrassement selon l'invention, on va utiliser un compresseur pour ajuster $P_{int}$ à la profondeur d'immersion, et donc à $P_{ext}$. L'ajustement est fait de sorte que la valeur absolue de la différence entre $P_{int}$ et $P_{ext}$ soit inférieure ou égale à $2.10^5$ Pa (2 bar), ou mieux encore, inférieure à $5.10^4$ Pa (0,5 bar). De préférence, $P_{int}$ et $P_{ext}$ sont égales.

On pourra alors procéder à l'actionnement de la plaque pour provoquer un effet antifouling, sans être gêné par une potentielle différence de pression entre les faces avant et arrière de la plaque. On précise que la plaque peut être actionnée en continue ou ponctuellement (par exemple avant la prise de mesures par le dispositif de mesure 10).

On précise que la pression dans la cavité 2 peut être réglée en fonction de la profondeur d'immersion, mais on peut aussi la régler en mesurant la pression du liquide d'immersion. En effet, le système anti-encrassement 1 peut tout à fait intégrer un capteur de pression apte à mesurer la pression du liquide d'immersion.

Alternativement, la déformée de la plaque peut être utilisée pour déduire la pression, une calibration préalable étant nécessaire.

La plaque peut être de forme rectangulaire, carrée ou circulaire ; avantageusement, il peut s'agir d'une membrane. A titre d'exemple, la plaque peut être une plaque de verre dont les côtés peuvent mesurer par exemple entre quelques millimètres à quelques centimètres.

De manière connue, une unité de commande peut être utilisée pour commander à l'actionneur de mettre en vibration la plaque. Cette unité de commande peut être configurée pour commander l'actionneur de sorte que la plaque vibre dans son premier mode de vibration mécanique.

Plusieurs actionneurs peuvent être répartis sur la face avant et/ou sur la face arrière de la plaque.

De manière connue, le ou les actionneurs peuvent être choisis parmi des actionneurs piézoélectriques, ferroélectriques, électrostatiques, magnétiques ou thermiques.

De préférence, le ou les actionneurs sont réalisés sur la face arrière de la plaque, c'est-à-dire sur la face opposée à la face (face avant) de la plaque destinée à être en contact avec le liquide d'immersion.

On précise que dans le cas où le dispositif de mesure est un dispositif de mesure optique, par exemple un capteur optique, la plaque et la cavité sont réalisées en des matériaux qui sont transparents à la longueur d'onde considéré (c'est-à-dire qu'ils laissent passer au moins 90 % du faisceau optique). De même, l'actionneur est positionné de sorte à permettre le passage du faisceau optique, afin que le faisceau optique puisse atteindre la surface sensible.

Le système anti-encrassement selon l'invention peut être réalisé par différents procédés de réalisation ; par exemple, pour réaliser le ou les actionneurs, on peut utiliser une céramique piézoélectrique ou bien encore des couches minces en matériaux piézoélectriques (AlN, PZT, LNO, etc.) mises en forme par les technologies de la microélectronique.

Pour illustrer l'invention, nous allons décrire un exemple de procédé de réalisation d'un système antiencrassement selon l'invention comportant un seul actionneur réalisé en utilisant une céramique piézoélectrique (et destiné à être situé sur la face arrière de la plaque). Les étapes sont représentées schématiquement sur les figures 6A à 6J.

Sur l'une des faces principales (que nous appellerons face avant) d'un substrat 100, par exemple un substrat en silicium d'une épaisseur d'environ 725 $\mu$m et de 200 mm de diamètre, on effectue une oxydation thermique de sorte à former une couche d'oxyde 101 (SiO$_2$), par exemple d'une épaisseur de 500 nm (figure 6A).

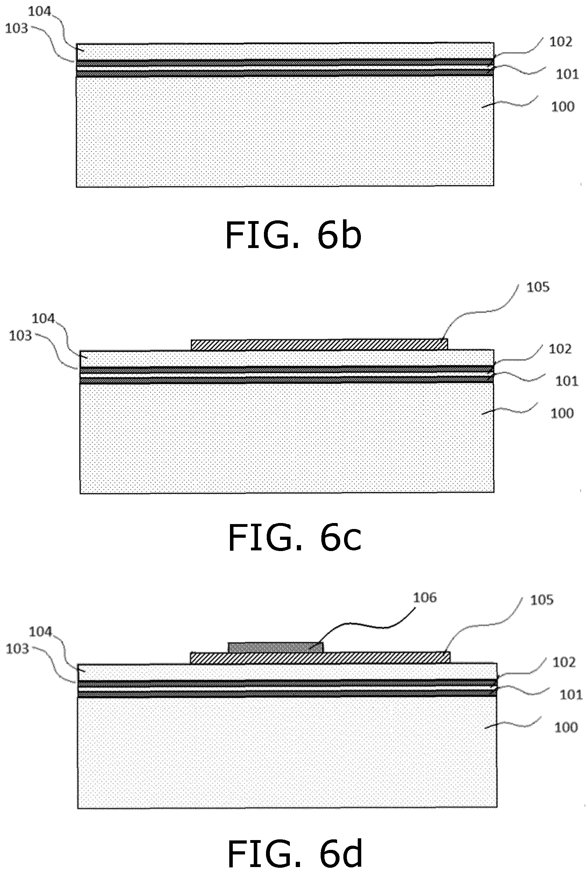

Sur cette couche d'oxyde 101, on dépose successivement, par exemple par PECVD (pour « Plasma Enhanced Chemical Vapor Deposition »), une couche 102 en platine, une couche 103 en TEOS (orthosilicate de tétraéthyle (Si(OCH$_2$CH$_3$)$_4$). Une couche 104 en résine photosensible, par exemple en un polymère SINR du fabriquant Shin-Etsu, y est ensuite laminée (figure 6B). Par exemple, les couches Pt/TEOS/SINR ont respectivement une épaisseur d'environ 100 nm, 500 nm, 80 $\mu$m.

Selon une autre variante non représentée, on aurait également pu déposer une couche en titane, avant la couche en platine. Par exemple, on aurait pu obtenir un multicouche Ti/Pt/TEOS/SINR, les couches ayant respectivement une épaisseur d'environ 10 nm, 100 nm, 500 nm, 80 $\mu$m.

On réalise ensuite un actionneur piézoélectrique. Pour cela, sur une portion de la surface de la couche 104 en SINR, on dépose une couche en or (Au) d'environ 500 nm (figure 6C).

A titre de variante non représentée, on aurait également pu déposer, à la place de la couche 105, une multicouche comprenant une première couche en tungstène W d'environ 50 nm d'épaisseur, puis une deuxième couche en alliage de nitrure de tungstène (WN) d'environ 50 nm et enfin, une troisième couche en or (Au) d'environ 200 nm. Les couches en tungstène et en nitrure de tungstène permettent d'améliorer l'accroche de la couche en or.

Puis on dépose une couche 106 de colle conductrice, par exemple une couche de pâte d'argent, par exemple par sérigraphie (figure 6D).

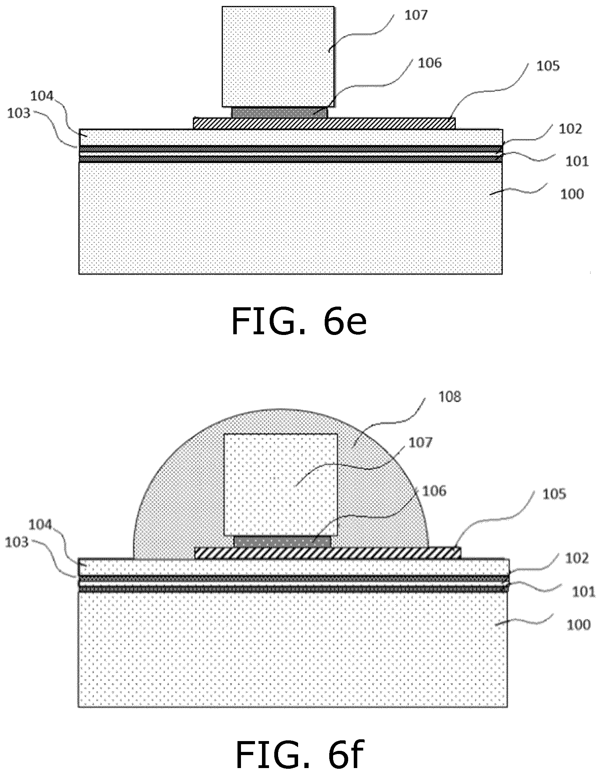

On dépose ensuite sur cette couche 106 un bloc 107 en céramique piézoélectrique, d'environ 250 $\mu$m d'épaisseur (figure 6E). Ce bloc 107 va former le corps de l'actionneur piézoélectrique et les couches 105 et 109 les électrodes inférieure et supérieure, respectivement, de l'actionneur.

Ensuite, on encapsule ce bloc 107 et une partie de la couche 105 en les recouvrant à l'aide d'une résine d'encapsulation (par exemple avec du « glob top ») pour isoler électriquement ultérieurement les électrodes 105 et 109 (figure 6F).

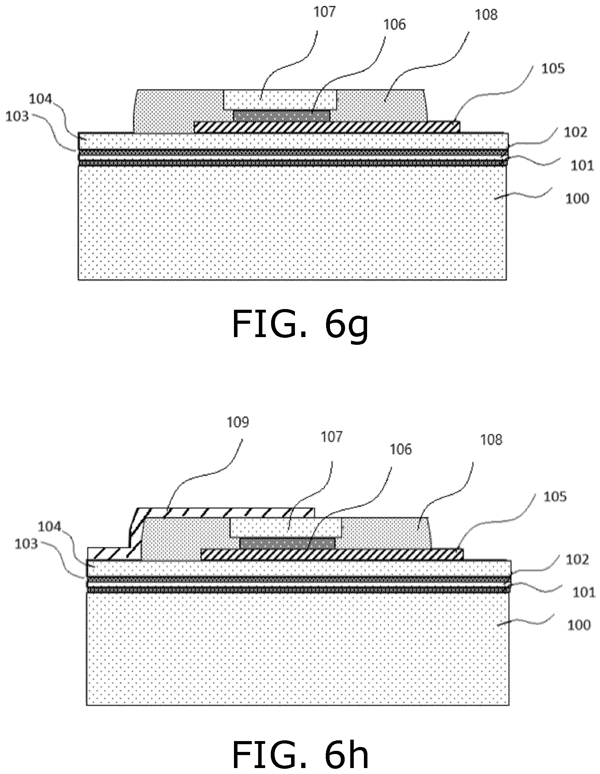

Puis, on arase ce bloc encapsulé jusqu'à conserver une portion du bloc en céramique piézoélectrique (figure 6G). La portion de bloc arasée a par exemple une épaisseur de 90 $\mu$m.

Sur une portion de ce bloc arasé, on dépose une couche 109 qui va former l'électrode supérieure de l'actionneur ; pour cela, on dépose par exemple une couche en or (Au) d'environ 500 nm (figure 6H).

A titre de variante non représentée, on aurait pu déposer un bicouche pour former l'électrode supérieure, par exemple en déposant une couche en titane (Ti) d'environ 20 nm et une couche en or (Au) d'environ 500 nm. La couche en titane est une couche d'accroche pour que la couche en or adhère bien.

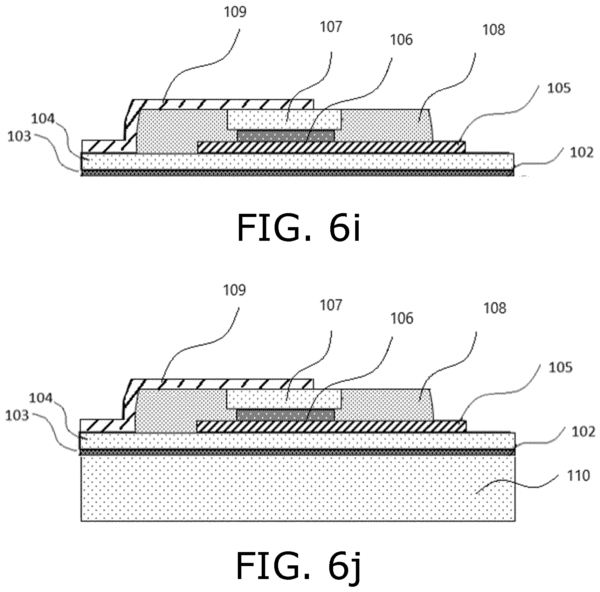

Puis, on sépare cet ensemble en deux sous-ensembles par pelage, la séparation se faisant à l'interface entre la couche 103 en TEOS et la couche 102 en platine (figure 6I).

Le sous-ensemble comprenant le bloc arasé forme un actionneur 10 et il est collé au niveau de sa couche 103 en TEOS, par exemple à l'aide d'une couche de colle UV non représentée, sur une plaque 8, qui est de préférence une membrane, par exemple une feuille en polymère, par exemple en polycarbonate (figure 6J).

Pour former la cavité 2, on peut intégrer la plaque munie de son ou de ses actionneurs piézoélectriques à un boitier 4, comme décrit sur la figure 5, en assurant l'étanchéité et le maintien à l'aide de vis et de joints. Par souci de lisibilité, la représentation des parois a été simplifiée dans la figure 5 par rapport à la figure 4.

La cavité 2 peut être une sous partie du boitier 4, obtenue notamment en fixant une paroi transparente, par exemple en PVC, PC ou tout autre matériau adapté, dans le boitier. Un orifice permettra le passage du fluide venant du compresseur 3.

Le compresseur à fluide 3, qui est en communication fluidique avec la cavité 2, peut être situé dans ou hors du boitier 4. Il est relié à la cavité 2 par un canal ou un tuyau. Le compresseur peut être par exemple un compresseur disponible dans le commerce, comme par exemple un compresseur du fabriquant Würth.

**Revendications**

1. Système (1) de lutte contre l'encrassement biologique par des microorganismes, destiné être reporté sur un dispositif de mesure qui est destiné à être immergé dans un liquide à une pression P$_{liquide}$ et qui comprend une surface sensible sensible (7) à l'encrassement biologique, le système (1) étant configuré pour recouvrir la surface sensible,

le système comprenant :

- une plaque (110) apte à vibrer, ayant deux faces principales opposées, dites face avant et face arrière, la face avant étant destinée à être en contact avec le liquide ; et
- au moins un actionneur, situé sur l'une des faces principales de la plaque, apte à mettre en vibration la plaque, de manière à au moins limiter une fixation de microorganismes sur la plaque ;

le système étant **caractérisé en ce qu'**il comprend en outre :

- une cavité (2) fermée, qui est délimitée au moins en partie par la face arrière de la plaque 110, et qui est remplie avec un fluide à une pression $P_{cavité}$ ; et
- un compresseur à fluide (3), en communication fluidique avec la cavité 2 fermée, apte à moduler la pression $P_{cavité}$ de fluide dans la cavité, de sorte que la valeur absolue de la différence entre la pression $P_{liquide}$ sur la face avant et la pression $P_{cavité}$ sur la face arrière soit inférieure à $2.10^5$ Pa (2 bar), préférentiellement $5.10^4$ Pa (0,5 bar), idéalement que les pressions soient égales.

2. Système selon la revendication 1, dans lequel la cavité (2) fermée a une profondeur, selon une direction perpendiculaire à la face arrière de la plaque (110), comprise entre 1 et 10 mm, bornes incluses.

3. Système selon la revendication 1 ou la revendication 2, dans lequel la surface sensible est une fenêtre optique.

4. Ensemble (30) comprenant un dispositif de mesure (10) et un système (1) de lutte contre l'encrassement biologique selon l'une quelconque des revendications 1 à 3, dans lequel la cavité (2) est disposée au contact de l'intégralité de la surface sensible (7), la surface sensible et la plaque se faisant face l'une l'autre.

5. Ensemble selon la revendication 4, dans lequel le dispositif de mesure est disposé à l'intérieur d'un boitier (4) de protection, le système de lutte contre l'encrassement biologique étant utilisé pour fermer et rendre étanche le boitier, la cavité, et éventuellement le compresseur à fluide du système, étant disposé(s) à l'intérieur du boîtier.

6. Ensemble (30) comprenant un dispositif de mesure (10) et un système (1) de lutte contre l'encrassement biologique selon l'une quelconque des revendications 1 à 3, dans lequel la cavité (2) est disposée à distance de la surface sensible (7), la surface sensible et la plaque se faisant face l'une l'autre, le système de lutte contre l'encrassement biologique étant utilisé pour fermer et rendre étanche le boitier, la cavité, et éventuellement le compresseur à fluide du système, étant disposé(s) à l'intérieur du boîtier.

**Patentansprüche**

1. System (1) zur Bekämpfung biologischer Verschmutzung durch Mikroorganismen, das auf eine Messvorrichtung übertragen werden soll, die zum Eintauchen in eine Flüssigkeit bei einem Druck $P_{Flüssigkeit}$ bestimmt ist und eine empfindliche Oberfläche (7) umfasst, die empfindlich auf biologische Verschmutzung reagiert, wobei das System (1) so eingerichtet ist, dass es die empfindliche Oberfläche bedeckt,

das System umfassend:

- eine vibrierfähige Platte (110) mit zwei gegenüberliegenden Hauptflächen, die als Vorderseite und Rückseite bezeichnet werden, wobei die Vorderseite dazu bestimmt ist, mit der Flüssigkeit in Kontakt zu kommen; und
- mindestens ein Stellglied, das sich auf einer der Hauptflächen der Platte befindet und in der Lage ist, die Platte in Vibration zu versetzen, um eine Anhaftung von Mikroorganismen auf der Platte mindestens zu begrenzen;

**dadurch gekennzeichnet, dass** es weiter umfasst:

- einen geschlossenen Hohlraum (2), der mindestens teilweise von der Rückseite der Platte 110 begrenzt wird und der mit einem Fluid bei einem Druck $P_{Hohlraum}$ gefüllt ist; und
- einen Fluidkompressor (3), der in fluidischer Verbindung mit dem geschlossenen Hohlraum 2 steht und in der Lage ist, den Druck $P_{Hohlraum}$ des Fluids im Hohlraum so zu modulieren, dass der absolute Wert der Differenz zwischen dem Druck $P_{Flüssigkeit}$ auf der Vorderseite und dem Druck $P_{Hohlraum}$ auf der Rückseite kleiner als $2,10^5$ Pa (2 bar), vorzugsweise $5,10^4$ Pa (0,5 bar), ist, und dass die Drücke idealerweise gleich sind.

2. System nach Anspruch 1, wobei der geschlossene Hohlraum (2) eine Tiefe, in einer Richtung senkrecht zur Rückseite der Platte (110), zwischen 1 und 10 mm, einschließlich Klemmen aufweist.

3. System nach Anspruch 1 oder Anspruch 2, wobei die empfindliche Oberfläche ein optisches Fenster ist.

4. Baugruppe (30) umfassend eine Messvorrichtung (10) und ein System (1) zur Bekämpfung biologischer Verschmutzung nach einem der Ansprüche 1 bis 3, wobei der Hohlraum (2) in Kontakt mit der gesamten empfindlichen Oberfläche (7) angeordnet ist, wobei die empfindliche Oberfläche und die Platte einander gegenüberliegen.

5. Baugruppe nach Anspruch 4, wobei die Messvorrichtung innerhalb eines Schutzgehäuses (4) angeordnet ist, wobei das System zur Bekämpfung biologischer Verschmutzung dazu verwendet wird, das Gehäuse zu schließen und abzudichten, wobei der Hohlraum und gegebenenfalls der Fluidkompressor des Systems innerhalb des Gehäuses angeordnet ist/sind.

6. Baugruppe (30) umfassend eine Messvorrichtung (10) und ein System (1) zur Bekämpfung biologischer Verschmutzung nach einem der Ansprüche 1 bis 3, wobei der Hohlraum (2) in einem Abstand von der empfindlichen Oberfläche (7) angeordnet ist, wobei die empfindliche Oberfläche und die Platte einander gegenüberliegen, wobei das System zur Bekämpfung biologischer Verschmutzung dazu verwendet wird, das Gehäuse zu schließen und abzudichten, wobei der Hohlraum und gegebenenfalls der Fluidkompressor des Systems innerhalb des Gehäuses angeordnet ist/sind.

**Claims**

1. A system (1) for combating biological fouling by micro-organisms, intended to be transferred to a measuring device which is intended to be immersed in a liquid at a pressure $P_{liquid}$ and which comprises a sensitive surface (7) sensitive to biological fouling, the system (1) being configured to cover the sensitive surface,

   the system comprising:

   - a plate (110) capable of vibrating, having two opposite main faces, referred to as front face and rear face, the front face being intended to be in contact with the liquid; and
   - at least one actuator, located on one of the main faces of the plate, capable of vibrating the plate, so as to at least limit binding of micro-organisms on the plate;

   the system being **characterised in that** it further comprises:

   - a closed cavity (2), which is delimited at least partially by the rear face of the plate 110, and which is filled with a fluid at a pressure $P_{cavity}$; and
   - a fluid compressor (3), in fluid communication with the closed cavity 2, capable of modulating the fluid pressure $P_{cavity}$ in the cavity, such that the absolute value of the difference between the pressure $P_{liquid}$ on the front face and the pressure $P_{cavity}$ on the rear face is less than $2.10^5$ Pa (2 bar), preferably $5.10^4$ Pa (0.5 bar), ideally so that the pressures are equal.

2. The system according to claim 1, wherein the closed cavity (2) has a depth, in a direction perpendicular to the rear face of the plate (110), between 1 and 10 mm inclusive.

3. The system according to claim 1 or claim 2, wherein the sensitive surface is an optical window.

4. An assembly (30) comprising a measuring device (10) and a system (1) for combating biological fouling according to any one of claims 1 to 3, wherein the cavity (2) is disposed in contact with the entire sensitive surface (7), the sensitive surface and the plate facing each other.

5. The assembly according to claim 4, wherein the measuring device is disposed inside a protective housing (4), the system for combating biological fouling being used to close and seal the housing, the cavity, and optionally the fluid compressor of the system, being disposed inside the housing.

6. An assembly (30) comprising a measuring device (10) and a biological fouling control system (1) according to any one of claims 1 to 3, wherein the cavity (2) is disposed at a distance from the sensitive surface (7), the sensitive surface and the plate facing each other, the system for combating biological fouling being used to close and seal the housing, the cavity, and optionally the fluid compressor of the system, being disposed inside the housing.

# FIG. 1

# FIG. 2

# FIG. 3

# FIG. 4

FIG. 5

FIG. 6a

104
103

102
101
100

# FIG. 6b

105

104
103

102
101
100

# FIG. 6c

106    105

104
103

102
101
100

# FIG. 6d

FIG. 6e

FIG. 6f

107  106  108  105  104  103  102  101  100

## FIG. 6g

109  107  106  108  105  104  103  102  101  100

## FIG. 6h

FIG. 6i

FIG. 6j

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3106211